# EUROPÄISCHE PATENTSCHRIFT

(11) **EP 0 582 258 B1**
(45) Veröffentlichungstag und Bekanntmachung des Hinweises auf die Patenterteilung: **29.10.1997**
(21) Anmeldenummer: 93112371.5
(22) Anmeldetag: 02.08.1993
(51) Int. Cl.: F16B 7/04

(54) **Befestigungsvorrichtung**
Fastening device
Dispositif de fixation

(30) Priorität: 05.08.1992 DE 4225926
(43) Veröffentlichungstag der Anmeldung: 09.02.1994
(73) Patentinhaber: MERO-RAUMSTRUKTUR GmbH & Co. Würzburg, D-97082 Würzburg (DE)
(72) Erfinder: Späth, Werner F., D-79793 Wutöschingen (DE)
(74) Vertreter: Böck, Bernhard

(56) Entgegenhaltungen:
- EP-A- 0 476 289
- DE-A- 2 556 235
- FR-A- 2 280 338
- US-A- 3 574 367

## Beschreibung

Die vorliegende Erfindung betrifft eine Befestigungsvorrichtung mit den Merkmalen des Anspruchs 1.

Befestigungsvorrichtungen zum Verbinden von Profilelementen sind an sich bekannt. Gestelle aus durch solche Befestigungsvorrichtungen verbundenen Profilelementen werden vornehmlich im Messe- und Ladenbau verwendet. Ein bekannter derartiger Verbinder (DE-PS 31 53 232) besteht aus einem Gehäuse und einem darin längsverschieblichen Halteglied, dessen Ende als Haken zum Hintergreifen einer Nut ausgebildet ist. Die Längsverschiebung erfolgt durch einen in dem Gehäuse gelagerten Exzenter, dessen Kopf eine Öffnung in dem Gehäuse durchsetzt. Das Halteglied ist innerhalb des Gehäuses in Querrichtung durch eine gegenüber der Längserstreckung des Haltegliedes vorstehende Zunge derart gefedert, daß es den Exzenterkopf gegenüber dem Gehäuse vortreten läßt. Gegen die Federwirkung des Haltegliedes läßt sich der Exzenter soweit in das Gehäuse eindrücken, daß das Gehäuse in eine stirnseitige Öffnung einer Profilstange einführbar ist. In der Profilstange ist eine dem Exzenterkopf entsprechende Öffnung ausgebildet, in die dieser bei geeigneter Ausrichtung einschnappt. Wird der Exzenter gedreht, um den Haken hinter die Nut greifen zu lassen, bewegt sich ein Endstück des Haltegliedes über einen Anschlag. Der Exzenter ist damit nicht mehr in das Gehäuse eindrückbar, so daß ein unbeabsichtigtes Lösen der Befestigungsvorrichting vermieden wird.

Bei einer weiteren bekannten Befestigungsvorrichtung (EP-A-412 383) ist das Halteglied vorderseitig längs geschlitzt unter Ausbildung zweier Plattenzungen. Die Plattenzungen besitzen zueinander entgegengerichtet Haken, die hinter gegenüberliegende Seiten einer Nut greifen. Auch bei dieser bekannten Befestigungsvorrichtung dient das Halteglied durch seine entsprechende Ausbildung als Federung für den Exzenter.

Die beiden bekannten Vorrichtungen haben den Nachteil, daß das Verspreizen der Halteelemente relativ schwergängig ist, da diese gleichzeitig als Federelemente wirken und somit eine hohe Reibung an der Gehäuseführung hervorrufen.

Aus der EP-A-0 059 463 ist eine Befestigungsvorrichtung mit einem in einem Gehäuse längs beweglich aufgenommenen Halteglied bekannt, das sich auf einer Blattfeder im Gehäuse abstützt. Zur Längsverschiebung des Halteglieds im Gehäuse ist eine Betätigungseinrichtung vorgesehen, deren Betätigung die Überwindung der durch die Blattfeder auf das Halteglied wirkenden Rückstellfederkräfte notwendig macht.

Aus der DE-A-31 29 597 ist eine Befestigungsvorrichtung bekannt, bei der das Halteglied selbst als Feder ausgebildet ist.

Der vorliegenden Erfindung liegt die Aufgabe zugrunde, eine Befestigungsvorrichtung zu schaffen, die leicht betätigbar ist und darüber hinaus einen möglichst geringen Verstellweg zur Überführung des Halteglieds in eine Klemmstellung erfordert.

Dieses Problem wird durch eine Befestigungsvorrichtung mit den Merkmalen des Anspruchs 1 gelöst.

Erfindungsgemäß ist das Halteglied in Querrichtung ungefedert, so daß nur ein geringes Anzugsmoment notwendig ist, um die Befestigung zweier Profilstangen zu bewirken. Im Messebau werden häufig Gestelle aus Profilstangen aufgebaut, in denen mehrere hundert oder sogar tausend Befestigungsvorrichtungen verwendet werden. Ein leichtgängiges Anziehen der Vorrichtungen ist somit ein wesentliches Kriterium für die Akzeptanz der Befestigungsvorrichtungen durch das Montage-personal. Dasselbe gilt natürlich auch für das Lösen der Befestigungen.

Bevorzugt erfolgt die Betätigung der Vorrichtung durch eine Exzentereinrichtung, deren Exzenterscheibe auf das Halteglied wirkt. Exzenter haben den Vorteil, daß mit relativ geringen Drehbewegungen große Haltekräfte hervorgerufen werden können. Prinzipiell sind jedoch auch andere Betätigungsvorrichtungen, z.B. Schrauben, denkbar.

Die Exzentereinrichtung ist vorzugsweise in Querrichtung beweglich gelagert und durch eine elastische Einrichtung vorgespannt, so daß der Exzenterkopf gegenüber dem Gehäuse vorsteht. Dabei kann das Gehäuse eine innere Ausnehmung aufweisen, in die Exzenterscheibe bei unverspreiztem Halteglied eindrückbar ist. Bei verspreiztem Halteglied liegt die Exzenterscheibe dagegen auf einer Gehäuseinnenfläche auf, so daß ein unbeabsichtigtes Lösen der Befestigungsvorrichtung ausgeschlossen ist. Dies hat den Vorteil, daß der Exzenter selber als Anschlag verwendet wird. Somit werden aufwendige Ausgestaltungen des Endabschnittes des Haltegliedes vermieden, die sonst notwendig wären, um diesen Abschnitt auf einen Anschlag aufsetzen zu lassen. Darüberhinaus ist der Exzenter als Bauelement wesentlich stabiler als das Halteglied selbst, so daß die Sicherungsfunktion auch bei Überbeanspruchungen gewährleistet ist.

Bei den bekannten Vorrichtungen wirkt die Exzenterscheibe auf Abbiegungen an dem Halteglied. Bei hohen Beanspruchungen kann dies zu einem allmählichen Umbiegen der Abbiegungen und damit zu einer geringeren Haltekraft führen. Gemäß einem bevorzugten Ausführungsbeispiel der Erfindung wirkt die Exzenterscheibe direkt auf eine Öffnung in dem Halteglied, so daß eine wesentlich höhere Stabilität erzielt wird. Gleichzeitig kann das Halteglied dichter an der Gehäusewand geführt werden, aus der der Exzenterkopf hervorsteht, so daß die Führung des Exzenters entsprechend länger ausgebildet werden kann, was ebenfalls zu einer höheren Stabilität führt.

Es gibt Anwendungen, bei denen die Haltekraft der bekannten Vorrichtungen nicht hinreichend ist. Zwar greift die Befestigungsvorrichtung gemäß der EP-A-0 412 338 an beide Nutenseiten an. Dieses Angreifen erfolgt jedoch unsymmetrisch, so daß die Haltekraft insbesondere gegenüber hohen Momenten nicht hinreichend sein kann. Gemäß einem besonders bevorzugten Ausführungsbeispiel weist die Befestigung zwei Halteglieder auf, nämlich ein oberes und ein unteres Halteglied (Die Angabe von oben bzw. unten ist nicht als schutzeinschränkend zu verstehen sondern dient lediglich der einfacheren Zuordnung der Elemente). Jedes Halteglied hat zumindest einen Haken, die entgegengesetzt ausgebildet sind und derart verspreizt werden, daß ein Halteglied auf eine Seite einer Nut und das andere Halteglied auf die andere Seite der Nut wirkt. Bei diesem bevorzugten Ausführungsbeispiel erhält die Befestigungsvorrichtung eine enorme Stabilität, auch gegen Torsionsbeanspruchungen. Die Halteglieder greifen symmetrisch an der Nut an, so daß Biege- und Torsionsbeanspruchungen in jede Richtung hervorragend aufgenommen werden und nicht zu einer Zerstörung der Verbindung führen.

Eine besonders bevorzugte Ausführungsform ergibt sich, wenn das obere Halteglied zwei voneinander versetzte Haken aufweist und das untere Halteglied einen Haken, der zwischen den Haken des oberen Haltegliedes angeordnet ist. Dies führt zu Materialeinsparungen gegenüber solchen Ausführungsformen, bei denen beide Haken gleich groß ausgebildet sind, und zwar unter Beibehaltung der symmetrischen Anordnung, so daß auch diese Ausführungsform gegenüber Torsionsbeanspruchungen besonders belastbar ist.

Vorzugsweise sind die Haken dabei an jeweiligen Beinen der Halteglieder angeordnet. Die Beine können dann gegenüber der Längserstreckung der Halteglieder derart gekröpft sein, daß die Haken im unverspreizten Zustand fluchten. Somit können die Haken bezogen auf die festgelegte Breite einer Nut entsprechend groß und damit stabil dimensioniert werden, genauso, als wäre nur ein Haken in die Nut einzuführen. Diese Ausführungsform verbindet also insbesondere die Vorteile einer symmetrischen Anordnung mit denen eines kräftig ausgebildeten Hakens.

Vorzugsweise greift der Exzenter nur an einem Halteglied an. Das andere Halteglied wird dann durch das andere geführt. Konstruktiv kann dies besonders einfach dadurch gelöst werden, daß in dem einen Halteglied eine Ausnehmung angeordnet ist, in die eine Nase bzw. Schulter des anderen Haltegliedes greift. Beispielsweise kann das obere Halteglied eine Ausnehmung aufweisen, in die eine Schulter des unteren Haltegliedes greift. Vorzugsweise ist dabei in dem oberen Halteglied eine nach unten vorstehende Zunge in Nachbarschaft zu der Ausnehmung ausgebildet und derart abgebogen, daß die Schulter des unteren Haltegliedes im verspreizten Zustand in der Ausnehmung bzw. an der Zunge verkeilt wird. Denn bei einer Verspreizung der Halteglieder gegeneinander zum Hintergreifen der Nuten werden diese bevorzugt auch winkelmäßig zueinander versetzt. Dies wird durch die entsprechende Ausbildung der Zunge ausgenutzt, so daß sich die Halteglieder gegeneinander verkeilen. Dies erhöht weiter die Stabilität der Befestigung.

Generell ist es von großem Vorzug, wenn die Halteglieder bzw. das Halteglied und das Gehäuse derart ausgebildet sind, daß im unverspreizten Zustand des bzw. der Halteglieder nur eine punkt- bzw. linienförmige Berührung stattfindet. Dies führt zu einer sehr geringen Reibung und damit zu geringen Anzugskräften. Dieser Zustand wird daher vorzugsweise für nahezu die ganze Schließbewegung aufrecht erhalten. Erst im vollständig verspreizten Zustand der Halteglieder kommen diese in flächigen Kontakt zu den Gehäuseinnenflächen, so daß eine hohe Reibung vorliegt. Somit ergibt sich auf vorteilhafte Weise, daß gemäß dieser bevorzugten Ausführungsform das Anziehen bzw. Lösen der Befestigungsvorrichtung weitgehend reibungsfrei verläuft, im angezogenen Zustand dagegen eine hohe Reibung vorliegt, was die Haltekraft weiter erhöht.

Gemäß einem weiteren bevorzugten Ausführungsbeispiel kommt die Schulter des unteren Haltegliedes, die in die Ausnehmung des oberen Haltegliedes greift, im verspreizten Zustand in Anlage an das Gehäuseinnere. Somit wird das untere Halteglied in verspreiztem Zustand zwischen der unteren Gehäuseinnenfläche und der oberen Gehäuseinnenfläche verkeilt. Dies erhöht die Haltekraft weiter.

Die Spreizeinrichtung weist vorzugsweise einen im Gehäuse starr gelagerten Balken auf. Wenn nur ein Halteglied verwendet wird, kann dieser Balken einstückig mit dem Gehäuse ausgebildet sei. Wenn zwei Halteglieder verwendet werden, ist es von Vorzug, wenn der Spreizbalken in eine entsprechende Ausnehmung in dem Gehäuse eingelegt wird und dort starr gehalten wird. Dabei liegt der Spreizbalken zwischen dem oberen und dem unteren Halteglied. Bei einer Bewegung der Halteglieder nach hinten (mit der Richtung "hinten" wird nachstehend aus Gründen der einfachen Bezeichnung jene Richtung angegeben, in die die Halteglieder bewegt werden, damit sich deren Haken aus der Nut lösen) laufen Abbiegungen bzw. Kröpfungen an den Haltegliedern gegen den Spreizbalken, so daß die Halteglieder gegeneinander verspreizt werden. Ein solcher Spreizbalken ist besonders günstig herzustellen. Die Montage ist unaufwendig.

Nachstehend wird ein bevorzugtes Ausführungsbeispiel der erfindungsgemäßen Befestigungsvorrichtung anhand der Zeichnung beschrieben.
Figur 1 ist eine Längsschnittansicht einer bevorzugten Ausführungsform der erfindungsgemäßen Befestigungsvorrichtung mit unverspreizten Haltegliedern und eingedrücktem Exzenterelement;
Figur 2 ist eine der Figur 1 ähnliche Ansicht, jedoch mit in eine Profilöffnung eingeschnapptem Exzenterkopf;
Figur 3 ist eine Draufsicht auf die Ausführungsform der Figuren 1 und 2 bei abgenommenem Deckelgehäuse;
Figur 4 ist eine den Figuren 1 und 2 ähnliche Darstellung, die die Ausführungsform mit verspreizten Haltegliedern zeigt;
Figur 5 ist eine der Figur 3 entsprechende Darstellung, die die Ausführungsform mit verspreizten Haltegliedern zeigt; und
Figur 6 ist eine explosionsartige Darstellung der Bauelemente der Ausführungsform der erfindungsgemäßen Befestigungsvorrichtung.

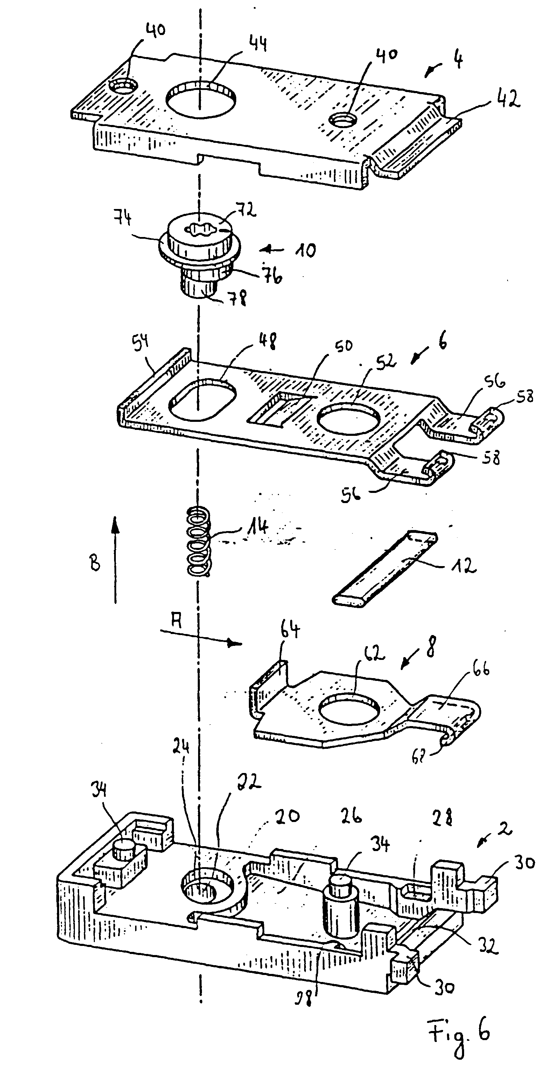

Anhand der Figur 6 wird zunächst der Aufbau einer Ausführungsform der erfindungsgemäßen Befestigungsvorrichtung beschrieben.

Ein Gehäusegrundteil 2 und ein Gehäusedeckel 4 bilden das Gehäuse. An dem Gehäusegrundteil 2 sind auf Vorsprüngen Nietschließköpfe 34 vorgesehen, die in entsprechende Öffnungen 40 in den Gehäusedeckel 4 einführbar sind. Die Öffnungen 40 sind konisch angeschrägt, so daß das Material der Nietschließköpfe 34 nach dem Nietvorgang in den Öffnungen 40 so verschwindet, daß eine durchgehende Deckeloberseite gebildet wird.

In dem Gehäusegrundteil 2 ist eine Führungsbohrung 22 vorgesehen, in die ein Führungszylinder 78 eines Exzenterelementes 10 einführbar ist. Um die Führungsbohrung 22 ist eine Exzenterausnehmung 24 vorgesehen, in die eine Exzenterscheibe 76 des Exzenterelementes 10 einführbar ist. In dem Gehäusegrundteil 2 ist weiterhin eine Halteelementausnehmung 26 vorgesehen, die von hinten nach vorne schräg abfällt. In diesem Zusammenhang wird auf die Pfeile A und B der Figuren verwiesen, die in die Richtungen "vorne" bzw. "oben" weisen. Diese Pfeile sollen der einfacheren Richtungsangabe dienen.

An die Haltelementausnehmung 26 schließt sich nach vorne eine untere Leitfläche 32 an, die nach vorne relativ steil ansteigt. Etwa im Bereich des Übergangs zwischen Haltelementausnehmung 26 und unterer Leitfläche 32 sind am Rand des Gehäusegrundteils 2 Spreizelementauflagen 28 ausgebildet, in die ein Spreizelement 12 einlegbar ist. An der Vorderseite des Gehäusegrundteils 2 sind jeweils seitlich von der unteren Leitfläche 32 Führungsnasen 30 vorgesehen.

Der Gehäusedeckel 4 weist eine konzentrisch über der Führungsbohrung 22 des Gehäusegrundteils 2 angeordnete Exzenterkopföffnung 44 auf, die von einem Exzenterkopf 72 des Exzenterelementes 10 durchsetzbar ist. Der Grad der Durchsetzung wird durch eine Anschlagscheibe 74 des Exzenterelemtes 10 begrenzt. An dem Gehäusedeckel 4 ist weiterhin eine gekröpfte Nase 42 vorgesehen, deren schräg nach unten verlaufender Abschnitt bei aufgesetztem Gehäusedeckel über der unteren Leitfläche 32 liegt und etwa symmetrisch zu dieser unter Ausbildung einer oberen Leitfläche abgebogen ist.

Die Nase 42 und der vordere Abschnitt des Gehäusegrundteils 2 sind so ausgebildet, daß in dem Gehäuse eine vorderseitige Öffnung ausgebildet ist.

Ein unteres Halteelement 8 ist in die Halteelementausnehmung 26 des Gehäusegrundteiles einlegbar und weist an einem hinteren Abschnitt eine nach vorstehende Schulter 64 auf, die in eine entsprechende Ausnehmung eines oberen Halteelementes 6 eingreifen kann.

In dem unteren Halteelement 8 ist weiterhin eine Öffnung 62 ausgebildet, die länglich ausgeformt ist, um eine Bewegung des unteren Haltelementes 8 um den den Nietschließkopf 34 tragenden Vorsprung zu gestatten, der gegenüber der Halteelementausnehmung 26 vorsteht. Das vordere Ende des unteren Haltelementes 8 ist als nach oben gekröpftes Bein 66 ausgebildet, dessen Fuß nach unten um etwa 180 Grad unter Ausbildung eines Hakens 68 abgebogen ist.

Daa obere Halteelement 6 wird über dem unteren Halteelement 7 angeordnet, ist endseitig mit einer Schulter 54 ausgebildet und weist im Bereich des Exzenterelementes 10 eine in Querrichtung verlaufende Exzenterscheibenöffnung 48 sowie eine der Öffnung 62 entsprechende Öffnung 52 auf. Zwischen den Öffnungen 48 und 52 ist eine Ausnehmung vorgesehen, durch die eine Zunge 50 ausgebildet ist, die nach unten abgebogen ist. Vorderseitig weist das obere Haltelement 6 zwei nach unten gekröpfte Beine 56 auf, die endseitig um etwa 180 Grad unter Ausbildung von Haken 58 nach oben abgebogen sind.

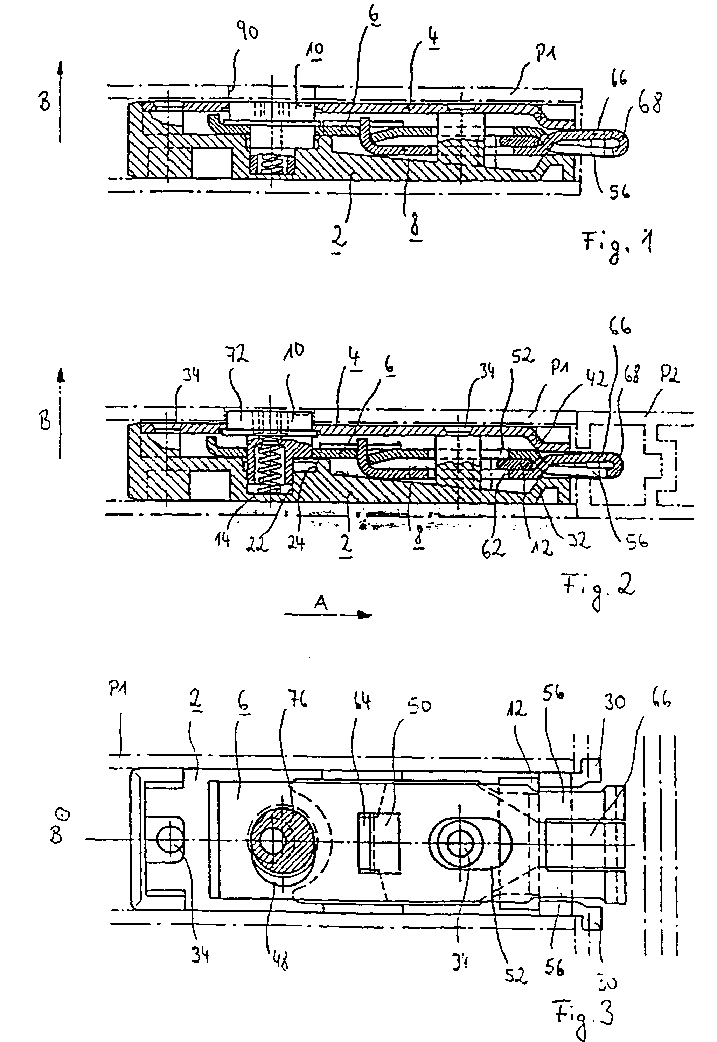

Der Zusammenbau dieser Ausführungsform der erfindungsgemäßen Befestigungsvorrichtung ergibt sich wie folgt: In die Halte-elementausnehmung 26 des Gehäusegrundteils 2 wird das untere Halteelement 8 eingelegt. Anschließend wird das Spreizelement 12 in die Spreizelementauflagen 28 eingelegt. Hierauf wird das obere Halteelement 6 gelegt. In ein Sackloch des Führungszylinders 78 des Exzenterelementes 10 wird eine Feder 14 eingeschoben, wonach das Exzenterelement 10 in die Führungsbohrung 22 des Gehäusegrundteils 2 eingeführt wird. Anschließend wird der Gehäusedeckel 4 aufgesetzt und die Nietschließköpfe 34 werden in den Nietbohrungen 40 versenkt. Somit ergibt sich eine kompakte, außen bündige Form der Befestigungsvorrichtung, wobei der Exzenterkopf 72 durch die Wirkung der Feder 14 gegenüber dem Gehäusedeckel 4 vorsteht, wie es in Figur 2 im Querschnitt zu sehen ist.

Nachstehend wird die Funktion dieser Ausführungsform der erfindungsgemäßen Befestigungsvorrichtung anhand der Figuren 1 bis 5 erläutert.

Bevor die Befestigungsvorrichtung in eine stirnseitige Öffnung eines Profils P1 eingeführt wird, ist deren Exzenterelement 10 nach vorne zu drehen. Die Feder 14 drückt das Exzenterelement 10 nach oben, so daß dessen Kopf 72 gegenüber dem Gehäusedeckel 4 vorsteht. In diesem Zustand befinden sich die Halteelemente 6, 8 in einem unverspreizten Zustand, hervorgerufen durch die untere Leitfläche 32 bzw. die durch die Nase 42 ausgebildete obere Leitfläche, die an den Kröpfungen der Halteelemente 6, 8 so angreifen, daß deren Beine 56, 66 gegeneinander verschränkt sind und deren Haken 58, 68 quasi fluchten. Das zwischen den Halteelementen 6, 8 angeordnete Spreizelement 12 verhindert ein weitergehendes Verschränken der Halteelemente 6, 8.

Um die Befestigungsvorrichtung in eine stirnseitige Öffnung eines Profils P1 einzuführen, wird der Exzenterkopf 72 gegen die Wirkung der Feder 14 eingedrückt, bis die Oberseite des Exzenterkopfes 72 mit der Außenseite des Gehäusedeckels 4 fluchtet, wie es in Figur 1 dargestellt ist. Die Befestigungsvorrichtung läßt sich nun in die Öffnung einschieben, bis der Exzenterkopf 72 in eine entsprechend angeordnete Öffnung 90 in dem Profilelement P1 schnappt, so daß die Befestigungsvorrichtung wieder jenen Zustand einnimmt, wie er in Figur 2 dargestellt ist.

Nun wird das Profilelement P1 mit der darin angeordneten Befestigungsvorrichtung gegen ein weiteres Profilelement P2 angesetzt, so daß die Beine 56, 66 der Halteelemente 6, 8 in eine hinterschnittene Nut in dem Profilelement P2 eingeführt sind. Bei diesem Vorgang dienen die an dem Gehäusegrundteil 2 angeordneten Führungsnasen 30 zur Führung der Beine 56, 66 in die Nut und verhindern gleichzeitig, daß das Profilelement P1 gegen das Profilelement P2 verdreht wird. Diesen Zustand zeigt auch Figur 3 von oben, wobei der Gehäusedeckel 4 abgenommen ist.

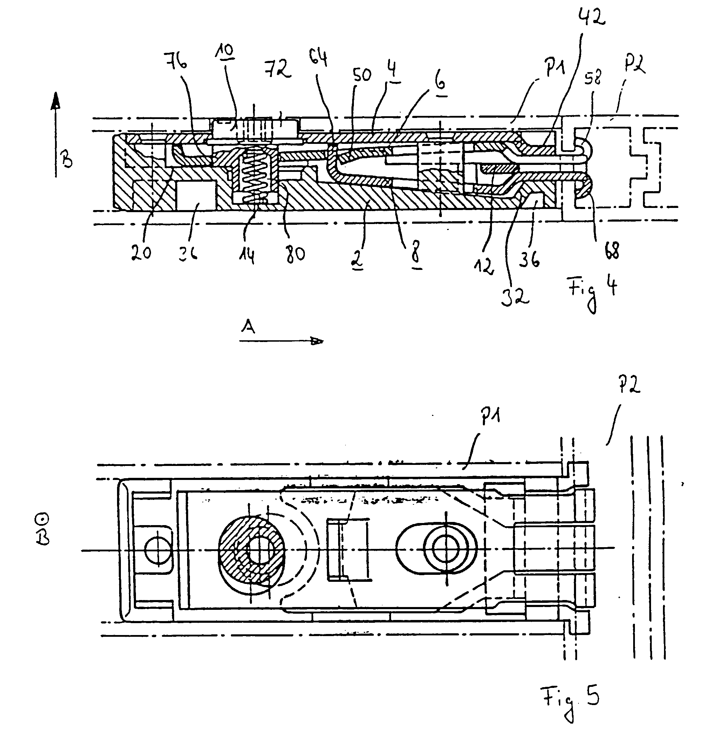

Um das Profilelement P1 starr mit dem Profilelement P2 zu verbinden, wird ein Spezialschlüssel in eine entsprechende Ausnehmung in dem Exzenterkopf 72 angesetzt und um etwa 180 Grad gedreht. Dabei wird das obere Halteelement 6 nach hinten gezogen durch die Wirkung der Exzenterscheibe 76 an der Ausnehmung 48 des oberen Halteelementes. Die Schulter 54 des oberen Halteelementes dient dabei zur Führung zwischen dem Boden 20 des Gehäusegrundteils und der Innenseite des Gehäusedeckels 4. Gleichzeitig mit dem oberen Halteelement 6 wird das untere Halteelement 8 nach hinten gezogen, da dessen Schulter 64 an der Zunge 50 angreift. Während der Bewegung der Halteelemente 6, 8 nach hinten werden diese gegeneinander nach oben bzw. unten verspreizt, da die Kröptungen ihrer Beine 56, 66 in Anlage an die Vorderseite des Spreizelementes 12 kommen. Somit greifen die Haken 58, 68 an der hinterschnittenen Nut des Profilelementes P2 an, was zu einer kraftschlüssigen Verbindung zwischen dem Profilelement P1 und dem Profilelement P2 über die Befestigungsvorrichtung führt (Fig. 4 und 5). In diesem Zustand ist ein Eindrücken des Exzenterkopfes 72 gegen die Wirkung der Feder 14 nicht möglich, da die untere Fläche der Exzenterscheibe 76 auf dem Boden 20 des Gehäusegrundteils 2 aufliegt. Im verspreizten Zustand liegen die Halteelemente 6, 8 weitgehend flächig an den jeweiligen Innenseiten des Gehäusedeckels bzw. des Gehäusegrundteils 2 an. Dies wird für das untere Halteelement 8 insbesondere durch die Ausgestaltung der Halteelementausnehmung 26 bewirkt, da diese nach vorne genauso schräg nach unten verläuft wie das untere Halteelement 8 im verspreizten Zustand. Die Schulter 64 des unteren Haltelementes 8 ist in der entsprechenden Ausnehmung gegen die Zunge 50 des oberen Halteelementes 6 verkeilt und liegt an dem Gehäusedeckel 4 an. Somit ergibt sich insgesamt ein sehr formschlüssiger Aufbau, was die Haltekraft insgesamt erhöht.

Ein Lösen der Protilelemente P1 und P2 voneinander ist möglich durch einfaches Drehen des Exzenterelementes 10 in die entgegengesetzte Richtung um 180 Grad. Dabei kommen die Kröpfungen der Beine 56, 66 der Halteelemente 6, 8 in Anlage an die untere Leitfläche 32 bzw. an die durch die Nase 42 ausgebildete obere Leitfläche, so daß die Halteelemente 6, 8 wieder gegeneinander verschränkt werden und in die Ausgangslage gelangen, wie sie in Figur 2 dargestellt ist.

### Bezugszeichenliste

- 2: Gehäusegrundteil
- 4: Gehäusedeckel
- 6: oberes Halteelement
- 8: unteres Halteelement
- 10: Exzenterelement
- 12: Spreizelement
- 14: Feder
- 20: Boden
- 22: Führungsbohrung
- 24: Exzenterausnehmung
- 26: Halteelementausnehmung
- 28: Spreizelementauflage
- 30: Führungsnasen
- 32: untere Leitfläche
- 34: Nietschließkopf
- 36: Ausnehmungen
- 40: Nietbohrungen
- 42: Nase
- 44: Exzenterkopföffnung
- 48: Exzenterscheibenöffnung
- 50: Zunge
- 52: Öffnung
- 54: Schulter
- 56: Beine
- 58: Haken
- 62: Öffnung
- 64: Mitnahmeschulter
- 66: Bein
- 68: Haken
- 72: Exzenterkopf
- 74: Anschlagscheibe
- 76: Exzenterscheibe
- 78: Führungszylinder
- 80: Sackloch
- A: Richtung "vorne"
- B: Richtung "oben"
- P1: Profilelement
- P2: Profilelement

## Patentansprüche

1. Befestigungsvorrichtung zum Verbinden von Profilelementen (P1, P2), von denen einige (P1) eine stirnseitige Öffnung, andere (P2) eine hinterschnittene Nut aufweisen, mit
- einem Gehäuse (2, 4), welches in eine stirnseitige Öffnung einschiebbar ist,
- wenigstens einem Halteglied (6; 6, 8), das im Gehäuse (2, 4) in Längsrichtung beweglich gelagert und mit wenigstens einem aus dem Gehäuse vorstehenden Haken (58; 58, 68) versehen ist,
- einer in das Gehäuse gegen Federwirkung versenkbare Betätigungseinrichtung (10), die bei eingeschobenem Gehäuse (2, 4) bedienbar ist und durch die das Halteglied (6; 6, 8) in Längsrichtung bewegbar ist, und
- einer Spreizeinrichtung (12), die auf das Halteglied (6; 6, 8) derart einwirkt, daß der Haken (58; 58, 68) nach Einführen in eine Nut bei einer Längsbewegung gegen die Einführrichtung die Nut hintergreift,
dadurch **gekennzeichnet,**
daß das Halteglied (6; 6, 8) im Versenkrichtung der Betätigungseinrichtung (10) ungefedert im Gehäuse (2, 4) geführt ist, derart, daß während der Längsbewegung des Halteglieds ein Auflager des Halteglieds durch das Gehäuse und das andere Auflager durch die Spreizeinrichtung (12) gebildet ist.

2. Befestigungsvorrichtung nach Anspruch 1, wobei die Betätigungseinrichtung eine Exzentereinrichtung (10) mit einer Exzenterscheibe (76), die auf das Haltglied (6; 6) wirkt, und einem Kopf (72) ist, der eine Gehäuseöffnung (44) durchsetzt.

3. Befestigungsvorrichtung nach Anspruch 2, wobei die Exzentereinrichtung (12) bei unverspreiztem Halteglied (6; 6, 8) in Querrichtung beweglich gelagert und durch eine elastische Einrichtung (14) derart vorgespannt ist, daß der Exzenterkopf (72) gegenüber dem Gehäuse (2, 4) vorsteht.

4. Befestigungsvorrichtung nach Anspruch 3, wobei das Gehäuse (2, 4) eine innere Ausnehmung (24) aufweist, in die die Exzenterscheibe (76) bei unverspreiztem Halteglied (6; 6, 8) gegen die Wirkung der elastischen Einrichtung (14) eindrückbar ist.

5. Befestigungsvorrichtung nach einem der Ansprüche 1 bis 4, wobei die Befestigungsvorrichtung ein oberes und eine unteres Halteglied (6 bzw. 8) aufweist, deren Haken (58 bzw. 68) entgegengesetzt ausgebildet sind und die derart verspreizt werden, daß das obere Halteglied (6) auf eine Seite der Nut, das untere Halteglied (8) auf die andere Seite der Nut wirkt.

6. Befestigungsvorrichtung nach Anspruch 5, wobei das obere Halteglied (6) zwei voneinander versetzte Haken (58, 58) aufweist und das untere Halteglied (8) einen Haken (68) aufweist, der zwischen den Haken (58, 58) des oberen Haltegliedes (6) angeordnet ist.

7. Befestigungsvorrichtung nach Anspruch 5 oder Anspruch 6, wobei die Haken (58, 68) an jeweiligen Beinen (56, 66) der Halteglieder (6, 8) angeordnet sind und die Beine (56, 66) gegenüber der Längserstreckung der Halteglieder (6, 8) derart gekröpft sind, daß die Haken (58, 68) im unverspreizten Zustand fluchten.

8. Befestigungsvorrichtung nach einem der Ansprüche 5 bis 7, wobei das obere Halteglied (6) eine Ausnehmung aufweist, in die eine Schulter (64) des unteren Haltegliedes (8) greift.

9. Befestigungsvorrichtung nach Anspruch 8, wobei in dem oberen Halteglied (6) eine nach unten vorstehende Zunge (50) in Nachbarschaft zu der Ausnehmung ausgebildet und derart abgebogen ist, daß die Schulter (64) des unteren Haltegliedes (8) im verspreizten Zustand in der Ausnehmung in dem oberen Halteglied (6) verkeilt ist.

10. Befestigungsvorrichtung nach einem der Ansprüche 1 bis 9, wobei das Halteglied (6) bzw. die Halteglieder (6, 8) und das Gehäuse derart ausgebildet sind, daß das Halteglied (6) bzw. die Halteglieder (6, 8) das Gehäuse (2, 4 ) im unverspreizten Zustand nur punkt- bzw. linienförmig, im verspreizten Zustand dagegen flächig berühren.

11. Befestigungsvorrichtung Anspruch 9 oder 10, wobei die Schulter (64) des unteren Haltegliedes (8) im verspreizten Zustand an einer Gehäuseinnenfläche anliegt.

12. Befestigungsvorrichtung nach einem der Ansprüche 5 bis 11, wobei die Spreizeinrichtung einen in dem Gehäuse (2, 4) starr gelagterten Spreizbalken (12) aufweist, auf den Abbiegungen an den Haltegliedern (6, 8) bzw. die Kröpfungen der Halteglieder (6, 8) bei einer Längsbewegung der Halteglieder (6, 8) gegen die Einführrichtung der Haken (58, 68) auflaufen.

## Claims

1. Fastening device for connecting profiled elements (P1, P2), of which some (P1) have an end-face opening while others (P2) have an undercut groove, the said device having
- a casing (2, 4) which can be pushed into an end-face opening,
- at least one holding member (6; 6, 8) which is mounted in the casing (2, 4) for movement in the longitudinal direction and is provided with at least one hook (58; 58, 68) projecting from the casing;
- an actuating arrangement (10) which can be countersunk in the casing against spring action and can be operated when the casing (2, 4) is pushed in, and by which the holding member (6; 6, 8) can be moved in the longitudinal direction, and
- a spreading arrangement (12) which acts upon the holding member (6; 6, 8) in such a way that the hook (58; 58, 68) engages, after introduction into a groove, behind the said groove when there is a longitudinal movement contrary to the direction of introduction,
**characterised in that**
the holding member (6; 6, 8) is guided in an unsprung manner in the casing (2, 4) in the direction of countersinking of the actuating arrangement (10), in such a way that, during the longitudinal movement of the holding member, one support surface for the said holding member is formed by the casing and the other support surface is formed by the spreading arrangement (12).

2. Fastening device according to claim 1, wherein the actuating arrangement is an eccentric arrangement (10) with an eccentric disc (76) which acts upon the holding member (6; 6), and with a head (72) which penetrates an opening (44) in the casing.

3. Fastening device according to claim 2, wherein the eccentric arrangement (12) is mounted for movement, when the holding member (6; 6, 8) is not spread apart, in the transverse direction and is pretensioned by an elastic arrangement (14) in such a way that the head (72) of the eccentric projects in relation to the casing (2, 4).

4. Fastening device according to claim 3, wherein the casing (2, 4) has an internal recess (24) into which the eccentric disc (76) can be pressed, against the action of the elastic arrangement (14), when the holding member (6; 6, 8) is not spread apart.

5. Fastening device according to one of claims 1 to 4, wherein the said fastening device has an upper and a lower holding member (6 and 8 respectively), the hooks of which (58 and 68 respectively) are of oppositely directed construction and which are spread apart in such a way that the upper holding member (6) acts upon one side of the groove and the lower holding member (8) acts on the other side of the groove.

6. Fastening device according to claim 5, wherein the upper holding member (6) has two hooks (58, 58) which are offset from one another, and the lower holding member (8) has a hook (68) which is disposed between the hooks (58, 58) of the upper holding member (6).

7. Fastening device according to claim 5 or claim 6, wherein the hooks (58, 68) are disposed, in each case, on legs (56, 66) of the holding members (6, 8) and the said legs (56, 66) are cranked in relation to the longitudinal extension of the holding members (6, 8) in such a way that the hooks (58, 68) are in alignment when in the unspread-apart condition.

8. Fastening device according to one of claims 5 to 7, wherein the upper holding member (6) has a recess in which a shoulder (64) on the lower holding member (8) engages.

9. Fastening device according to claim 8, wherein a downwardly projecting tongue (50) is constructed in the upper holding member (6), in the vicinity of the recess, and bent over in such a way that the shoulder (64) of the lower holding member (8), when in the spread-apart condition, is wedged in the recess in the upper holding member (6).

10. Fastening device according to one of claims 1 to 9, wherein the holding member (6), or the holding members (6, 8) and the casing, are constructed in such a way that the holding member (6) or holding members (6, 8) touch the casing (2, 4) in only a punctiform or linear manner when in the unspread-apart condition, but in an areal manner when in the spread-apart condition.

11. Fastening device according to claim 9 or 10, wherein the shoulder (64) of the lower holding member (8), when in the spread-apart condition, abuts against an internal face of the casing.

12. Fastening device according to one of claims 5 to 11, wherein the spreading arrangement has a spreading beam (12) which is rigidly mounted in the casing (2, 4) and onto which the bent-over portions on the holding members (6, 8) or the cranked portions of the said holding members (6, 8) run up when there is a longitudinal movement of the holding members (6, 8) contrary to the direction of introduction of the hooks (58, 68).

## Revendications

1. Dispositif de fixation pour relier des éléments profilés (P1, P2) dont certains (P1) présentent une ouverture frontale, d'autres (P2) une rainure contre-dépouillée, comprenant
- un logement (2, 4) qui peut être inséré dans une ouverture frontale,
au moins un organe de retenue (6; 6, 8), qui est disposé de manière mobile dans le sens longitudinal dans le logement (2, 4) et pourvu au moins d'un crochet (58; 58, 68) faisant saillie du logement,
un dispositif de manoeuvre (10) pouvant être enfoncé dans le logement dans le sens opposé à l'action d'un ressort, qui peut être commandé quand le logement (2, 4) est inséré et par lequel l'organe de retenue (6; 6, 8) peut être déplacé dans le sens longitudinal, et
un dispositif d'écartement (12) qui agit sur l'organe de retenue (6; 6, 8) de telle manière qu'après introduction dans une rainure par un mouvement longitudinal dans le sens contraire au sens d'introduction, le crochet (58; 58, 68) se cale dans la rainure,
caractérisé en ce que l'organe de retenue (6; 6, 8) est guidé sans être amorti dans le logement (2, 4) dans le sens d'enfoncement de l'organe de manoeuvre (10) de telle manière que pendant le mouvement longitudinal de l'organe de retenue, un support de l'organe de retenue est formé par le logement et l'autre support est formé par le dispositif d'écartement (12).

2. Dispositif de fixation selon la revendication 1, dans lequel le dispositif de manoeuvre est un dispositif à excentrique (10) avec un disque (76) de l'excentrique, qui agit sur l'organe de retenue (6, 6), et une tête (72) qui traverse une ouverture (44) du logement.

3. Dispositif de fixation selon la revendication 2, dans lequel lorsque l'organe de retenue (6; 6, 8) n'est pas écarté, le dispositif à excentrique (12) est disposé de manière mobile dans le sens transversal et est prétendu par un dispositif élastique (14) de telle manière que la tête (72) de l'excentrique fait saillie par rapport au logement (2, 4).

4. Dispositif de fixation selon la revendication 3, dans lequel le logement (2, 4) présente un évidement (24) interne dans lequel le disque (76) de l'excentrique peut être pressé dans le sens contraire à l'action du dispositif élastique (14) lorsque l'organe de retenue (6; 6, 8) n'est pas écarté.

5. Dispositif de fixation selon une des revendications 1 à 4, dans lequel le dispositif de fixation présente un organe de retenue supérieur et inférieur (6 ou encore 8) dont les crochets (58 ou encore 68) sont conformés de manière opposée et qui sont écartés de telle manière que l'organe de retenue (6) supérieur agit sur un côté de la rainure et l'organe de retenue (8) inférieur agit sur l'autre côté de la rainure.

6. Dispositif de fixation selon la revendication 5, dans lequel l'organe de retenue (6) supérieur présente deux crochets (58, 58) décalés l'un par rapport à l'autre et l'organe de retenue (8) inférieur présente un crochet (68) qui est placé entre les crochets (58, 58) de l'organe de retenue (6) supérieur.

7. Dispositif de fixation selon la revendication 5 ou la revendication 6, dans lequel les crochets (58, 68) sont disposés sur les branches (56, 66) respectives des organes de retenue (6, 8) et les branches (56, 66) sont coudées par rapport à la projection longitudinale des organes de retenue (6, 8) de telle manière que les crochets (58, 68) s'alignent en position non écartée.

8. Dispositif de fixation selon une des revendications 5 à 7, dans lequel l'organe de retenue (6) supérieur présente un évidement dans lequel un épaulement (64) de l'organe de retenue (8) inférieur s'emboîte.

9. Dispositif de fixation selon la revendication 8, dans lequel une languette faisant saillie vers le bas est formée dans l'organe de retenue (6) supérieur à proximité de l'évidement et est courbée de telle manière que l'épaulement (64) de l'organe de retenue (8) inférieur en position écartée est coincé dans l'évidement dans l'organe de retenue (6) supérieur.

10. Dispositif de fixation selon une des revendications 1 à 9, dans lequel l'organe de retenue (6) ou encore les organes de retenue (6, 8) et le logement sont conformés de telle manière que l'organe de retenue (6) ou encore les organes de retenue (6, 8) touchent le logement (2, 4) uniquement en formant des points ou encore des lignes en position non écartée et par contre à plat en position écartée.

11. Dispositif de fixation selon la revendication 9 ou 10, dans lequel l'épaulement (64) de l'organe de retenue (8) inférieur en position écartée est adjacent à une surface inférieure du logement.

12. Dispositif de fixation selon une des revendications 5 à 11, dans lequel le dispositif d'écartement présente une barre d'écartement (12) disposée de manière rigide dans le logement (2, 4) sur laquelle des courbes sur les organes de retenue (6, 8) ou encore des coudes des organes de retenue (6, 8) s'inclinent en sens contraire au sens d'introduction des crochets (58, 68) lors d'un mouvement longitudinal des organes de retenue (6, 8).
